# EUROPEAN PATENT APPLICATION

(11) **EP 2 579 378 A1**
(43) Date of publication of application: **10.04.2013**
(21) Application number: 11786769.7
(22) Date of filing: 27.05.2011
(51) Int. Cl.: H01M 10/0569, H01M 10/052, H01M 10/0567, H01M 10/0568

(54) **NONAQUEOUS ELECTROLYTE SOLUTION FOR SECONDARY BATTERY, AND SECONDARY BATTERY**

(30) Priority: 28.05.2010 JP 2010123177
(71) Applicant: Asahi Glass Company, Limited, Tokyo 100-8405 (JP)
(72) Inventor: ONOZAKI, Yu, Tokyo 100-8405 (JP); IWAYA, Masao, Tokyo 100-8405 (JP)
(74) Representative: Müller-Boré & Partner Patentanwälte
(86) International application number: PCT/JP2011/062260
(87) International publication number: WO 2011/149072

(57) **Abstract**

To provide a non-aqueous electrolyte solution for secondary batteries, which has long-term nonflammability and practically sufficient conductivity and which is capable of suppressing a decrease of battery capacity due to charge and discharge at a high rate, and a secondary battery using such a non-aqueous electrolyte solution. A non-aqueous electrolyte solution for secondary batteries, comprising a lithium salt and a solvent for dissolving the electrolyte salt, containing a specific hydrofluoroether, a specific ether other than such a hydrofluoroether, and a predetermined amount of a cyclic carbonate compound which is a compound having a ring made of carbon atoms and oxygen atoms, said ring containing a bond represented by -O-C(=O)-O-, and which contains no carbon-carbon unsaturated bond in its molecule; and a secondary battery comprising such non-aqueous electrolyte solution for secondary batteries, a positive electrode and a negative electrode.

## Description

### TECHNICAL FIELD

The present invention relates to a non-aqueous electrolyte solution for secondary batteries, which has long-term nonflammability and practically sufficient conductivity and which is capable of preventing a decrease of battery capacity due to charge and discharge at a high rate, and a secondary battery using such a non-aqueous electrolyte solution.

### BACKGROUND ART

As a solvent for a non-aqueous electrolyte solution for secondary batteries, a carbonate type compound such as ethylene carbonate or dimethyl carbonate, has been widely used in that it usually dissolves a lithium salt excellently to provide a high lithium ion conductivity, and it has a wide potential window. However, a carbonate type compound usually has a low flash point and thus has had a problem from the viewpoint of safety at the time of e.g. runaway of a battery.

In order to increase non-flammability (flame retardancy) without deteriorating the performance as a non-aqueous electrolyte, it has been proposed to add a fluorinated solvent (Patent Documents 1 to 3).

Further, in order to improve the solubility of an electrolyte salt, it has been proposed to use a cyclic non-fluorinated carbonate and a chain-structured non-fluorinated ether as non-fluorinated solvents (Patent Document 4).

On the other hand, it has been reported that lithium salts such as CF₃ SO₂ N(Li)SO₂ CF₃ and FSO₂ N(Li)SO₂F exhibit a strong interaction with etheric oxygen atoms of a glyme type solvent to form a stable 1:1 complex, and from the results of e.g. the thermal analysis, such a complex exhibits a behavior as if it were a single ion species and was not ignitable at all even by heating by a burner (Non-Patent Documents 1 and 2). Further, as examples wherein a complex of a lithium salt and a glyme type solvent, is used for an electrolyte solution, a non-aqueous electrolyte solution comprising LiBF₄ and 1-ethoxy-2-methoxyethane (Patent Document 5) and a non-aqueous electrolyte solution comprising (CF₃SO)₂ NLi and tetraglyme (Patent Document 6) are disclosed.

However, when the 1:1 complex of the lithium salt and the glyme type solvent as disclosed in Non-Patent Documents 1 and 2 was actually evaluated in the form of a non-aqueous electrolyte solution by the present inventors, it was found to have a high viscosity and low conductivity, and thus to be not practically useful. Further, also non-aqueous electrolyte solutions disclosed in Patent Documents 5 and 6 were found to likewise have low conductivity and to be not practically useful.

Therefore, in order to lower the viscosity of the non-aqueous electrolyte solution and to improve the conductivity, an electrolyte solution has been reported wherein a glyme complex comprising a lithium salt and a glyme type solvent, such as LiPF₆ and a cyclic perfluorosulfonimide, is dissolved in a hydrofluoroether (Patent Document 7).

### PRIOR ART DOCUMENTS

### PATENT DOCUMENTS

Patent Document 1: JP-A-08-037024
Patent Document 2: JP-A-2001-052737
Patent Document 3: JP-A-11-307123
Patent Document 4: JP-A-2008-218387
Patent Document 5: Japanese Patent No. 4405779
Patent Document 6: JP-A-2009-245911
Patent Document 7: W02009/133899

### NON-PATENT DOCUMENTS

Non-Patent Document 1: Summaries of presentations at 47th Symposium on Batteries in 2006 1 F06
Non-Patent Document 2: Summaries of presentations at 75th Elecetrochemical Society of Japan in 2008 3D09

### DISCLOSURE OF INVENTION

### TECHNICAL PROBLEM

However, the proposal in Patent Documents 1 to 3 has problems such that the solubility of the electrolyte salt is low, so that commonly employed LiPF₆ or LiBF₄ cannot be dissolved, and the viscosity is high, so that the rate performance tends to be poor.

The electrolyte solution as disclosed in Patent Document 4 has a problem such that the flame retardancy may sometimes deteriorate.

Further, by an evaluation carried out by the present inventors, it has been found that when the secondary battery using the non-aqueous electrolyte solution in Patent Document 7 is subjected to charge and discharge at a high rate (at a large amount of current) (e.g. charge and discharge at 2.0 C, where 1 C represents such a current value that a standard capacity of a battery is discharged in one hour), the battery capacity tends to decrease.

The present invention is to provide a non-aqueous electrolyte solution for secondary batteries, which has long-term nonflammability and practically sufficient conductivity and which is capable of preventing a decrease of battery capacity due to charge and discharge at a high rate, and a secondary battery using such a non-aqueous electrolyte solution.

### SOLUTION TO PROBLEM

In order to solve the above problems, the present invention has adopted the following constructions.
[1] A non-aqueous electrolyte solution for secondary batteries, comprising:
   a lithium salt (I), and
   a solvent (II) for dissolving the electrolyte salt, containing at least one compound (II-1) selected from the group consisting of a compound represented by the following formula (1) and a compound represented by the following formula (2), a compound (II-2) represented by the following formula (3), and a compound (II-3) which is a compound having a ring made of carbon atoms and oxygen atoms, said ring containing a bond represented by -O-C(=O)-O-, and which contains no carbon-carbon unsaturated bond in its molecule, wherein the content of the compound (II-3) is more than 10 vol% and at most 60 vol%, based on the total volume of the solvent (II) for dissolving the electrolyte salt:

      R¹-O-R² (1)

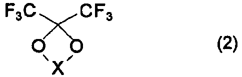

      R³-O-(̵Q¹-O)̵ₘ-R⁴ (3)
   wherein each of R¹ and R² which are independent of each other, is a C₁₋₁₀ alkyl group, a C₃₋₁₀ cycloalkyl group, a C₁₋₁₀ fluorinated alkyl group, a C₃₋₁₀ fluorinated cycloalkyl group, a C₁₋₁₀ alkyl group having at least one etheric oxygen atom between carbon-carbon atoms, or a C₁₋₁₀ fluorinated alkyl group having at least one etheric oxygen atom between carbon-carbon atoms,
   X is a C₁₋₅ alkylene group, a C₁₋₅ fluorinated alkylene group, a C₁₋₅ alkylene group having at least one etheric oxygen atom between carbon-carbon atoms, or a C₁₋₅ fluorinated alkylene group having at least one etheric oxygen atom between carbon-carbon atoms,
   m is an integer of from 2 to 10, and Q¹ is a C₁₋₄ linear alkylene group, or a group having at least one hydrogen atom in the linear alkylene group substituted by a C₁₋₅ alkyl group or by a C₁₋₅ alkyl group having at least one etheric oxygen atom between carbon-carbon atoms, provided that the plurality of Q¹ may be the same groups or different groups, and
   each of R³ and R⁴ which are independent of each other, is a C₁₋₅ alkyl group, or R³ and R⁴ are linked to each other to form a C₁₋₁₀ alkylene group.
[2] The non-aqueous electrolyte solution for secondary batteries according to the above [1], wherein the compound (II-3) is a compound represented by the following formula (4): 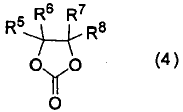 wherein each of R⁵ to R⁸ which are independent of one another, is a hydrogen atom, a halogen atom, an alkyl group or a halogenated alkyl group.
[3] The non-aqueous electrolyte solution for secondary batteries according to the above [1] or [2], wherein the compound (II-3) is at least one member selected from the group consisting of propylene carbonate, ethylene carbonate, butylene carbonate, 4-chloro-1,3-dioxolan-2-one, 4-fluoro-1,3-dioxolan-2-one and 4-trifluoromethyl-1,3-dioxolan-2-one.
[4] The non-aqueous electrolyte solution for secondary batteries according to any one of the above [1] to [3], wherein the ratio of No/ N_{Li} in the non-aqueous electrolyte solution for secondary batteries is from 2 to 6, where No is the total number of moles of etheric oxygen atoms in the compound (II-2) and N_{Li} is the total number of moles of lithium atoms in the lithium salt.
[5] The non-aqueous electrolyte solution for secondary batteries according to any one of the above [1] to [4], wherein the lithium salt (I) is at least one member selected from the group consisting of LiPF₆, a compound represented by the following formula (5), FSO₂N(Li)SO₂F, CF₃SO₂N(Li)SO₂CF₃, CF₃CF₂SO₂N(Li)SO₂CF₂CF₃, LiClO₄, a compound represented by the following formula (6), a compound represented by the following formula (7), and LiBF₄: 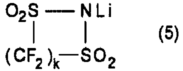 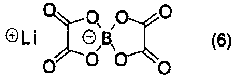 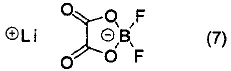 wherein k is an integer of from 1 to 5.
[6] The non-aqueous electrolyte solution for secondary batteries according to the above [5], wherein the lithium salt (I) is a compound represented by the formula (5) wherein k is 2.
[7] The non-aqueous electrolyte solution for secondary batteries according to any one of the above [1] to [6], wherein the compound (II-2) is a compound represented by the following formula (3A): 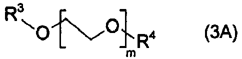 wherein m is an integer of from 2 to 10, and each of R³ and R⁴ which are independent of each other, is a C₁₋₅ alkyl group, or R³ and R⁴ are linked to each other to form a C₁₋₁₀ alkylene group.
[8] The non-aqueous electrolyte solution for secondary batteries according to any one of the above [1] to [7], wherein the compound (II-1) is at least one member selected from the group consisting of CF₃CH₂OCF₂CF₂H, CHF₂CF₂CH₂OCF₂CF₂H, CF₃CF₂CH₂OCF₂CHF₂, CF₃CH₂OCF₂CHFCF₃ and CHF₂CF₂CH₂O CF₂CFHCF₃.
[9] The non-aqueous electrolyte solution for secondary batteries according to any one of the above [1] to [8], wherein the compound (II-1) is a compound represented by the formula (2) wherein X is at least one member selected from the group consisting of CH₂, CH₂CH₂, CH(CH₃) CH₂ and CH₂CH₂CH₂.
[10] The non-aqueous electrolyte solution for secondary batteries according to any one of the above [1] to [9], which further contains a compound (II-4) which is a compound having a ring made of carbon atoms and oxygen atoms, said ring containing a bond represented by -O-C(=O)-O-, and which contains a carbon-carbon unsaturated bond in its molecule.
[11] The non-aqueous electrolyte solution for secondary batteries according to the above [10], wherein the compound (II-4) is at least one of a compound represented by the following formula (8-1) and a compound represented by the following formula (8-2): 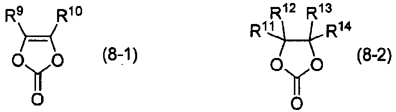 wherein each of R⁹ and R¹⁰ which are independent of each other, is a hydrogen atom, a halogen atom, an alkyl group or a halogenated alkyl group, and each of R¹¹ to R¹⁴ which are independent of one another, is a halogen atom, an alkyl group, a vinyl group or an allyl group, provided that at least one of R¹¹ to R¹⁴ is a vinyl group or an allyl group.
[12] An electrolyte solution for lithium ion secondary batteries, using the non-aqueous electrolyte solution for secondary batteries as defined in any one of the above [1] to [11].
[13] A secondary battery comprising a negative electrode made of a carbon material, metal lithium, a lithium-containing metal composite oxide material or a lithium alloy, as a material capable of absorbing and desorbing lithium ions, a positive electrode made of a material capable of absorbing and desorbing lithium ions, and the non-aqueous electrolyte solution for secondary batteries as defined in any one of the above [1] to [12].

### ADVANTAGEOUS EFFECTS OF INVENTION

By using the non-aqueous electrolyte solution for secondary batteries of the present invention, it is possible to obtain a secondary battery which has long-term nonflammability and practically sufficient conductivity and which is prevented from a decrease of battery capacity due to charge and discharge at a high rate.

### BRIEF DESCRIPTION OF DRAWINGS

Fig. 1 is a graph showing discharge capacity/voltage curves at the time of discharging at the respective discharge rates in Example 21.
Fig. 2 is a graph showing discharge capacity/voltage curves at the time of discharging at the respective discharge rates in Example 22.
Fig. 3 is a graph showing discharge capacity/voltage curves at the time of discharging at the respective discharge rates in Example 23.

### DESCRIPTION OF EMBODIMENTS

### <Non-aqueous electrolyte solution for secondary batteries>

The non-aqueous electrolyte solution for secondary batteries of the present invention (hereinafter referred to simply as "the non-aqueous electrolyte solution") is an electrolyte solution comprising the after-described lithium salt (I) and the solvent (II) for dissolving the electrolyte salt, containing the compound (II-1), the compound (II-2) and the compound (II-3). A non-aqueous electrolyte solution means an electrolyte solution using a solvent containing substantially no water, and it is an electrolyte solution such that even if it contains water, the amount of water is within such a range that performance degradation of a secondary battery using the non-aqueous electrolyte solution is not observed. The amount of water contained in the non-aqueous electrolyte solution is preferably at most 500 mass ppm, more preferably at most 100 mass ppm, particularly preferably at most 50 mass ppm, based on the total mass of the electrolyte solution. The lower limit of the amount of water is 0 mass ppm.

Hereinafter, in this specification, a compound represented by the formula (1) will be referred to as a compound (1), unless otherwise specified, and the same applies to compounds represented by other formulae.

### [Lithium salt (I)]

The lithium salt (I) is an electrolyte which will be dissociated in the non-aqueous electrolyte solution to supply lithium ions. The lithium salt (I) is preferably at least one member selected from the group consisting of LiPF₆, the following compound (5), FSO₂N(Li)SO₂ F, CF₃SO₂N(Li)SO₂CF₃, CF₃CF₂SO₂N(Li)SO₂CF₂CF₃, LiClO₄, the following compound (6), the following compound (7) and LiBF₄. The lithium salt (I) is more preferably at least one member selected from the group consisting of LiPF₆, LiBF₄ and the compound (5). That is, it is preferred to use LiPF₆ alone, LiBF₄ alone, one or more of the compound (5), LiPF₆ and the compound (5) in combination, LiPF₆ and LiBF₄ in combination, LiBF₄ and the compound (5) in combination, or LiPF₆, LiBF₄ and the compound (5) in combination. As the lithium salt (I), it is particularly preferred to use LiPF₆ alone, or LiPF₆ and the compound (5) (particularly the compound (5) wherein k is 2) in combination.

Further, other examples of a combination of the lithium salts include a combination of LiPF₆ and FSO₂N(Li)SO₂F, a combination of LiPF₆ and CF₃SO₂N(Li)SO₂CF₃, a combination of LiPF₆ and CF₃CF₂SO₂N(Li)SO₂CF₂CF₃, a combination of LiPF₆ and the compound (6), a combination of LiPF₆ and the compound (7), a combination of LiPF₆ and LiClO₄, a combination of LiPF₆, the compound (5) and FSO₂N(Li)SO₂F, a combination of LiBF₄ and FSO₂N(Li)SO₂F, a combination of LiBF₄ and CF₃SO₂N(Li)SO₂CF₃, a combination of LiBF₄ and CF₃CF₂SO₂N(Li)SO₂CF₂CF₃, a combination of LiBF₄ and the compound (6), a combination of LiBF₄ and the compound (7), a combination of LiBF₂ and LiClO₄, a combination of the compound (5) and FSO₂N(Li)SO₂F, a combination of the compound (5) and CF₃SO₂N(Li)SO₂CF₃, a combination of the compound (5) and CF₃CF₂SO₂N(Li)SO₂CF₂CF₃, a combination of the compound (5) and the compound (6), a combination of the compound (5) and the compound (7), a combination of the compound (5) and LiClO₄, a combination of LiPF₆, LiBF₄ and FSO₂N(Li)SO₂F, a combination of LiPF₆, LiBF₄ and CF₃SO₂N(Li)SO₂CF₃, a combination of LiPF₆, LiBF₄ and CF₃CF₂SO₂N(Li)SO₂CF₂CF₃, a combination of LiPF₆, LiBF₄ and the compound (6), a combination of LiPF₆, LiBF₄ and the compound (7), a combination of LiPF₆, LiBF₄ and LIClO, a combination of LiPF₆, the compound (5) and FSO₂N(Li)SO₂F, a combination of LiPF₆, the compound (5) and CF₃SO₂N(Li)SO₂CF₃, a combination of LiPF₆, the compound (5) and CF₃CF₂SO₂N(Li)SO₂CF₂CF₃, a combination of LiPF₆, the compound (5) and the compound (6), a combination of LiPF₆, the compound (5) and the compound (6), and a combination of LiPF₆, the compound (5) and LiClO₄: 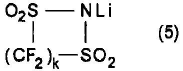 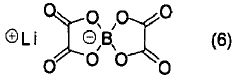 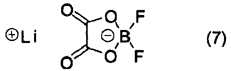 wherein k in the compound (5) is an integer of from 1 to 5.

Examples of the compound (5) include the following compounds (5-1) to (5-4). Among them, the compound (5-2) wherein k is 2 is preferred from the viewpoint that a non-aqueous electrolyte solution of the present invention having a high conductivity may easily be obtained.

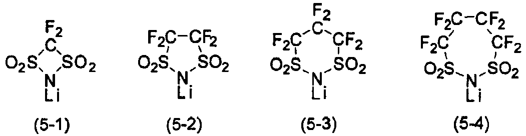

The amount of the lithium salt (I) in the non-aqueous electrolyte solution is not particularly limited and is preferably from 0.1 to 3.0 mol/L, particularly preferably from 0.5 to 2.0 mol/L. When the amount of the lithium salt (I) is at least the lower limit value in the above range, a non-aqueous electrolyte solution having a high conductivity may easily be obtained. Further, when the amount of the lithium salt (I) is at most the upper limit value in the above range, the lithium salt may easily be dissolved in the solvent (II) for dissolving the electrolyte salt, containing the after-described compounds (II-1) to (II-3) and, as the case requires, the compound (II-4).

Further, when both LiPF₆ and the compound (5) are used, the molar ratio (Mb/Ma) of the molar amount (Mb) of the compound (5) to the molar amount (Ma) of LiPF₆ is not particularly limited and is preferably from 0.01 to 10, more preferably from 0.05 to 2.0.

When the molar ratio (Mb/Ma) is at least the lower limit value in the above range, a high conductivity of the nonflammable non-aqueous electrolyte solution may easily be maintained. Further, when the molar ratio (Mb/Ma) is at most the upper limit value in the above range, a highly chemically-stable non-aqueous electrolyte solution may easily be obtained.

Further, when both LiPF₆ and LiBF₄ are used, the molar ratio (Mc/Ma) of the molar amount (Mc) of LiBF₄ to the molar amount (Ma) of LiPF₆ is not particularly limited and is preferably from 0.01 to 10, more preferably from 0.05 to 2.0.

When the molar ratio (Mc/Ma) is at least the lower limit value in the above range, a high conductivity of the nonflammable non-aqueous electrolyte solution may easily be maintained. Further, when the molar ratio (Mb/Ma) is at most the upper limit value in the above range, a highly chemically-stable non-aqueous electrolyte solution may easily be obtained.

Further, when at least one lithium salt (I-A) selected from the group consisting of LiPF₆, LiBF₄ and the compound (5), and at least one lithium salt (I-B) selected from the group consisting of FSO₂N(Li)SO₂F, CF₃SO₂N(Li)SO₂CF₃, CF₃CF₂SO₂N(Li)SO₂CF₂CF₃, LiClO₄, the compound (6) and the compound (7), are used in combination, the molar ratio (Me/Md) of the total molar amount (Me) of the lithium salt (I-B) to the total molar amount (Md) of the lithium salt (I-A) is not particularly limited and is preferably from 0.01 to 10, more preferably from 0.05 to 2.0.

When the molar ratio (Me/Md) is at least the lower limit value in the above range, a high conductivity of the nonflammable non-aqueous electrolyte solution may easily be maintained. Further, when the molar ratio (Me/Md) is at most the upper limit value in the above range, a highly chemically-stable non-aqueous electrolyte solution may easily be obtained.

### [Solvent (II) for dissolving electrolyte salt]

The solvent (II) for dissolving the electrolyte salt contains the after-described compounds (II-1) to (II-3) and, as the case requires, the compound (II-4).

### (Compounds (II-1))

The compound (II-1) is a solvent which imparts nonflammability to the non-aqueous electrolyte solution. The compound (II-1) is at least one compound selected from the group consisting the following compound (1) and the following compound (2). One of them may be used alone, or two or more of them may be used in an optional combination and ratio.

R¹-O-R² (1)

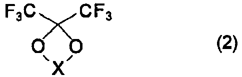

In the formula (1), each of R¹ and R² which are independent of each other, is a C₁₋₁₀ alkyl group, a C₃₋₁₀ cycloalkyl group, a C₁₋₁₀ fluorinated alkyl group, a C₃₋₁₀ fluorinated cycloalkyl group, a C₁₋₁₀ alkyl group having at least one etheric oxygen atom between carbon-carbon atoms, or a C₁₋₁₀ fluorinated alkyl group having at least one etheric oxygen atom between carbon-carbon atoms.

Further, in the formula (2), X is a C₁₋₅ alkylene group, a C₁₋₅ fluorinated alkylene group, a C₁₋₅ alkylene group having at least one etheric oxygen atom between carbon-carbon atoms, or a C₁₋₅ fluorinated alkylene group having at least one etheric oxygen atom between carbon-carbon atoms.

In this specification, "fluorinated" means that some or all of hydrogen atoms bonded to carbon atoms are substituted by fluorine atoms. A fluorinated alkyl group is a group having some or all of hydrogen atoms in an alkyl group substituted by fluorine atoms. In a partially fluorinated group, hydrogen atoms are present. The "partially fluorinated" means that some of hydrogen atoms bonded to carbon atoms are substituted by fluorine atoms.

Further, each of the above alkyl group and the alkyl group having an etheric oxygen atom between carbon-carbon atoms, may be a group having a straight chain structure, a branched structure or a partially cyclic structure (such as a cycloalkylalkyl group).

One or each of R¹ and R² in the compound (1) is preferably a fluorinated alkyl group. When one or each of R¹ and R² is a fluorinated alkyl group, the solubility of the lithium salt (I) in the non-aqueous electrolyte solution is improved. R¹ and R² in the compound (1) may be the same or different.

The compound (1) is preferably a compound (1-A) wherein each of R¹ and R² is a C₁₋₁₀ fluorinated alkyl group, or a compound (I-B) wherein R¹ is a C₁₋₁₀ fluorinated alkyl group having at least one etheric oxygen atom between carbon-carbon atoms and R² is a C₁₋₁₀ fluorinated alkyl group.

The compound (1) is preferably a compound wherein the total number of carbon atoms is from 4 to 10, more preferably a compound wherein the total number of carbon atoms is from 4 to 8, because if the number of carbon atoms is too small, the boiling point may be too low, and if the number of carbon atoms is too large, the viscosity may become high. The molecular weight of the compound (1) is preferably from 150 to 800, more preferably from 150 to 500, particularly preferably from 200 to 500. The number of etheric oxygen atoms in the compound (1) is influential over the flammability. Accordingly, in the case of the compound (1) having etheric oxygen atoms, the number of etheric oxygen atoms is preferably from 1 to 4, more preferably 1 or 2. Further, when the fluorine content in the compound (1) becomes high, the nonflammability will be improved. Accordingly, the proportion of the mass of fluorine atoms to the molecular weight of the compound (1) is preferably at least 50%, more preferably at least 60%.

Specific examples of the compound (1-A), the compound (1-B) and compounds other than the compound (1-A) and the compound (1-B), may, for example, be compounds disclosed in e.g. WO2009/133899.

By the non-aqueous electrolyte solution of the present invention, the lithium salt (I) can easily be uniformly dissolved, and a non-aqueous electrolyte solution having a high conductivity and being excellent in nonflammability can easily be obtained.

In a case where the compound (1) is used as the compound (II-1), it is preferably a compound (1-A) wherein each of R¹ and R² is a C₁₋₁₀ fluorinated alkyl group, more preferably CF₃ CH₂ OCF₂ CF₂ H (tradename: AE-3000, manufactured by Asahi Glass Company, Limited), CHF₂ CF₂ CH₂ OCF₂ CF₂ H, CF₃ CF₂ CH₂ OCF₂ CF₂ H, CF₃ CH₂ OCF₂ CHFCF₃ or CHF₂ CF₂ CH₂ OCF₂ CFHCF₃ , particularly preferably CF₃ CH₂ OCF₂ CF₂ H or CHF₂ CF₂ CH₂ OCF₂ CFHCF₃.

In the compound (2), X may have a straight chain structure or a branched structure. X is preferably a C₁₋₅ alkylene group, more preferably a C₂₋₄ alkylene group. Such an alkylene group preferably has a straight chain structure or a branched structure. In a case where the alkylene group for X has a branched structure, the side chain is preferably a C₁₋₃ alkyl group, or a C₁₋₃ alkyl group having an etheric oxygen atom.

Further, the compound (2) is preferably a compound (2) wherein X is at least one member selected from the group consisting of CH₂, CH₂ CH₂ , CH(CH₃)CH₂ and CH₂ CH₂ CH₂, in that the lithium salt (I) can be uniformly dissolved, and a non-aqueous electrolyte solution having a high conductivity and excellent nonflammability can easily be obtainable.

Specific examples of the compound (2) may, for example, be compounds represented by the following formulae.

In the non-aqueous electrolyte solution of the present invention, when the compound (2) is used as the compound (II-1), it is preferred to use a compound wherein X is CH₂ CH₂ or a compound wherein X is CH(CH₃)CH₂, in that the lithium salt (I) can easily be uniformly dissolved, and a non-aqueous electrolyte solution having a high conductivity and excellent nonflammability can easily be obtainable.

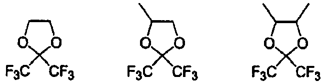

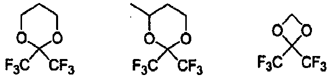

As the compound (II-1), it is possible to use the compound (1) alone, the compound (2) alone, or the compound (1) and the compound (2) in combination, and it is preferred to use the compound (1) or the compound (2) only.

The content of the compound (II-1) is preferably from 20 to 85 vol%, more preferably from 30 to 80 vol%, particularly preferably from 40 to 75 vol%, based on the total volume of the solvent (II) for dissolving the electrolyte salt.

The lower limit value for the content of the compound (II-1) is preferably at least 20 vol%, more preferably at least 30 vol%, further preferably at least 40 vol%, particularly preferably at least 45 vol%, most preferably at least 50 vol%, based on the total volume of the solvent (II) for dissolving the electrolyte salt. The upper limit value for the content of the compound (II-1) is preferably at most 85 vol%, more preferably at most 80 vol%, further preferably at most 75 vol%, based on the total volume of the solvent (II) for dissolving the electrolyte salt.

Further, the lower limit value for the content of the compound (II-3) based on the total mass (100 mass%) of the non-aqueous electrolyte solution is preferably at least 30 mass%, more preferably at least 40 mass%, further preferably at least 50 mass%. The upper limit value for the content of the compound (II-3) based on the total mass (100 mass%) of the non-aqueous electrolyte solution is preferably at most 90 mass%, more preferably at most 85 mass%, further preferably at most 80 mass%.

Further, in a case where the compound (1) (volume: Va) and the compound (2) (volume: Vb) are used in combination as the compound (II-1), their volume ratio (Vb/Va) is preferably from 0.01 to 100, more preferably from 0.1 to 10.

### (Compound (II-2))

The compound (II-2) is a solvent which plays a role to uniformly dissolve the lithium salt (I) in the above compound (II-1) by being efficiently solubilized with the lithium salt (I). A part or whole of the compound (II-2) is considered to form a complex with the lithium salt (I) in the electrolyte solution. The compound (II-2) is a compound represented by the following formula (3).

R³-O-(̵Q¹-O)̵ₘR⁴ (3)

In the above formula (3), m is an integer of from 2 to 10, and Q¹ is a C₁₋₄ linear alkylene group, or a group having at least one hydrogen atom in the linear alkylene group substituted by a C₁₋₅ alkyl group or by a C₁₋₅ alkyl group having at least one etheric oxygen atom between carbon-carbon atoms. The plurality of Q¹ may be the same groups or different groups.

Further, each of R³ and R⁴ which are independent of each other, is a C₁₋₅ alkyl group, or R³ and R⁴ are linked to each other to form a C₁₋₁₀ alkylene group.

In the compound (II-2), m is preferably an integer of from 2 to 6, more preferably an integer of from 2 to 5, particularly preferably an integer of from 2 to 4.

Q¹ is preferably a C₁₋₄ linear alkylene group, particularly preferably -CH₂ CH₂-. Further, when the plurality of Q¹ are of one type, they are preferably composed solely or -CH₂ CH₂ -, and when the plurality of Q¹ are of two or more types, they are preferably composed of a combination of -CH₂ CH₂ - (m=2) and other Q¹ except for m=2.

Each of R³ and R⁴ is preferably a methyl group or an ethyl group, more preferably a methyl group.

In the non-aqueous electrolyte solution of the present invention, the compound (II-2) is preferably the following compound (3A).

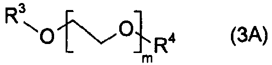

In the above formula (3A), m is an integer of from 2 to 10. Each of R³ and R⁴ which are independent of each other, is a C₁₋₅ alkyl group, or R³ and R⁴ are linked to each other to form a C₁₋₁₀ alkylene group.

In the compound (3A), a compound wherein each of R³ and R⁴ is a methyl group, and m is from 2 to 6, may, for example, be diglyme (m=2), triglyme (m=3), tetraglyme (m=4), pentaglyme (m=5) or hexaglyme (m=6).

Other compounds included in the compound (3A) may, for example, be diethylene glycol diethyl ether, diethylene glycol di-n-propyl ether, diethylene glycol di-iso-propyl ether, diethylene glycol di-n-butyl ether, triethylene glycol diethyl ether, triethylene glycol di-n-propyl ether, triethylene glycol di-iso-propyl ether, triethylene glycol di-n-butyl ether, tetraethylene glycol diethyl ether, tetraethylene glycol di-n-propyl ether, tetraethylene glycol di-iso-propyl ether, tetraethylene glycol di-n-butyl ether, pentaethylene glycol diethyl ether, pentaethylene glycol di-n-propyl ether, pentaethylene glycol di-iso-propyl ether, pentaethylene glycol di-n-butyl ether, hexaethylene glycol diethyl ether, hexaethylene glycol di-n-propyl ether, hexaethylene glycol di-iso-propyl ether, hexaethylene glycol di-n-butyl ether, etc.

In the compound (II-2), compounds wherein each of R³ and R⁴ is a methyl group or an ethyl group, Q¹ may be a group other than -CH₂ CH₂ -, and m is from 2 to 6 may, for example, be compounds disclosed in W02009/133899.

The compound (II-2) may, for example, be preferably diglyme, triglyme, tetraglyme, pentaglyme, hexaglyme, diethylene glycol diethyl ether, triethylene glycol diethyl ether, tetraethylene glycol diethyl ether, pentaethylene glycol diethyl ether or hexaethylene glycol diethyl ether, more preferably diglyme, triglyme, tetraglyme, pentaglyme or hexaglyme.

Further, as the compound (II-2), diglyme, triglyme, tetraglyme, pentaglyme, diethylene glycol diethyl ether, triethylene glycol diethyl ether, tetraethylene glycol diethyl ether or pentaethylene glycol diethyl ether, wherein m is from 2 to 5, is preferred, in that the viscosity at 20°C is at most 5 cP, and the non-aqueous electrolyte solution will be excellent in the practical solvent viscosity, and the obtainable non-aqueous electrolyte solution exhibits good conductivity. Diglyme (flash point: 50°C), triglyme (flash point: 110°C) or tetraglyme (flash point: 144°C) is more preferred in that it is excellent in the balance of both properties of the viscosity and the flash point.

Further, in the compound (II-2), a compound wherein R³ and R⁴ are linked to form a C₁₋₁₀ alkylene group may, for example, be 12-crow-4, 14-crown-4, 15-crown-5 or 18-crown-6.

The compound (II-2) is preferably composed essentially of a compound of the formula (3) wherein m is from 2 to 6, more preferably composed solely of a compound of the formula (3) wherein m is from 2 to 6, further preferably composed solely of one type selected from the group consisting of compounds of the formula (3) wherein m is from 2 to 6, particularly preferably composed solely of diglyme, triglyme or tetraglyme.

The content of the compound (II-2) is preferably from 0.2 to 4.0 times by mol, more preferably from 0.5 to 3.0 times by mol, particularly preferably from 0.5 to 2.0 times by mol, to the total amount (by mol) of the lithium salt (I) in the non-aqueous electrolyte solution.

When the molar ratio of the compound (II-2) to the lithium salt (I) is at least the lower limit value in the above range, the lithium salt (I) can easily be uniformly dissolved in the compound (II-1). Further, when the molar ratio of the compound (II-2) to the lithium salt (I) is at most the upper limit value in the above range, a non-aqueous electrolyte solution excellent in nonflammability can easily be obtainable.

The ratio (Nₒ/N_{Li}) of the total number of moles (Nₒ) of etheric oxygen atoms in the compound (II-2) to the total number of moles (N_{Li}) of lithium atoms in the lithium salt (I), contained in the non-aqueous electrolyte solution of the present invention, is preferably from 2 to 6, more preferably from 2 to 4. When the above ratio (Nₒ/N_{Li}) is at least the lower limit value, it becomes easy to dissolve the lithium salt (I) in the compound (II-1). On the other hand, when the above ratio (Nₒ/N_{Li}) is at most the upper limit value in the above range, a decrease of the battery capacity due to charge and discharge at a high rate can easily be suppressed. Further, the cycle properties under a high voltage will be improved.

The amount of the compound (II-2) in the non-aqueous electrolyte solution is preferably such an amount that the above ratio (Nₒ/N_{Li}) becomes within the above range.

The lower limit value for the content of the compound (II-2) is preferably at least 5 vol%, more preferably at least 7 vol%, further preferably at least 10 vol%, particularly preferably at least 13 vol%, most preferably at least 15%, based on the total volume of the solvent (II) for dissolving the electrolyte salt. The upper limit value for the content of the compound (II-3) is preferably at most 30 vol%, more preferably at most 25 vol%, further preferably at most 22 vol%, based on the total volume of the solvent (II) for dissolving the electrolyte salt.

Further, the lower limit value for the content of the compound (II-3) based on the total mass (100 mass%) of the non-aqueous electrolyte solution is preferably at least 3 mass%, more preferably at least 5 mass%, further preferably at least 7 mass%, particularly preferably at least 10 mass%. The upper limit value for the content of the compound (II-3) based on the total mass (100 mass%) of the non-aqueous electrolyte solution is preferably at most 25 mass%, more preferably at most 20 mass%, further preferably at most 17 mass%, particularly preferably at most 15 mass%.

### (Compound (II-3))

The compound (II-3) is a compound having a ring made of carbon atoms and oxygen atoms, said ring containing a bond represented by -O-C(=O)-O-, and is a compound which contains no carbon-carbon unsaturated bond in its molecule. Here, in this specification, a carbonate compound is a compound containing a bond represented by -O-C(=O)-O- (hereinafter referred to also as a "carbonate bond"). A cyclic carbonate compound is a compound having a ring containing a carbonate bond. A carbon-carbon unsaturated bond is a carbon-carbon double bond or a carbon-carbon triple bond.

The compound (II-3) has a high polarity and plays a role of suppressing a decrease of the battery capacity due to charge and discharge at a high rate. Further, by improving the degree of dissociation of the lithium salt (I), it is possible to improve the conductivity of the non-aqueous electrolyte solution. Further, by efficiently solvating the lithium salts (I), it is possible to assist uniform dissolution of the lithium salt (I) in the compound (II-1).

The ring in the compound (II-3) is preferably a 4- to 10-membered ring, more preferably a 4- to 7-membered ring, further preferably a 5- or 6-membered ring from the viewpoint of availability, particularly preferably a 5-membered ring.

The ring of the compound (II-3) is preferably a ring having one carbonate bond, more preferably a ring wherein a carbonate bond is linked with a linear alkylene group. The number of carbon atoms in the linear alkylene group is preferably from 1 to 7, more preferably from 1 to 4, further preferably 2 or 3, particularly preferably 2. Further, such a linear alkylene group may have a substituent. The substituent may, for example, be a halogen atom, an alkyl group or a halogenated alkyl group.

The compound (II-3) is preferably a cyclic carbonate compound selected from propylene carbonate, ethylene carbonate and butylene carbonate, or a compound having at least one hydrogen atom bonded to a carbon atom constituting the ring of the cyclic carbonate compound substituted by a halogen atom, an alkyl group or a halogenated alkyl group. The halogen in the halogen atom or the halogenated alkyl group is preferably a chlorine atom or a fluorine atom.

Further, the compound (II-3) is preferably the following compound (4):

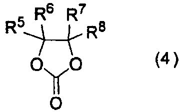

In the above formula, each of R⁵ to R⁸ which are independent of one another, is a hydrogen atom, a halogen atom, an alkyl group or a halogenated alkyl group.

Specific examples of the compound (4) include propylene carbonate, ethylene carbonate, butylene carbonate, 4-chloro-1,3-dioxolan-2-one, 4-fluoro-1,3-dioxolan-2-one and 4-trifluoromethyl-1,3-dioxolan-2-one. Among them, ethylene carbonate, propylene carbonate or 4-fluoro-1,3-dioxolan-2-one is preferred from the viewpoint of easy availability and the nature of the electrolyte solution.

As the compound (II-3), one type of the compound may be used alone, or two or more types of the compound may be used in combination.

The content of the compound (II-3) is more than 10 vol% and at most 60 vol%, based on the total volume of the solvent (II) for dissolving the electrolyte salt. When the content of the compound (II-3) is more than 10 vol%, a decrease of battery capacity due to charge and discharge at a high rate can be suppressed. Further, the degree of dissociation of the lithium salt (I) will be improved, and the conductivity will be better. When the content of the compound (II-3) in the non-aqueous electrolyte solution is at most 60 vol%, a non-aqueous electrolyte solution excellent in no flammability will be obtainable. With respect to the content of the compound (II-3) with a view to satisfying both good conductivity and nonflammability, the upper limit value of the content is more preferably 50 vol%, and the lower limit value of the content is more preferably 13 vol%.

The lower limit value of the content of the compound (II-3) is preferably at least 10 vol%, more preferably at least 12 vol%, further preferably at least 14 vol%, particularly preferably at least 16 vol%, based on the total volume of the solvent (II) for dissolving the electrolyte salt. The upper limit value of the content of the compound (II-3) is preferably at most 60 vol%, more preferably at most 50 vol%, further preferably at most 40 vol%, particularly preferably at most 30 vol%, based on the total volume of the solvent (II) for dissolving the electrolyte salt.

Further, the lower limit value of the content of the compound (II-3) based on the total mass (100 mass%) of the non-aqueous electrolyte solution is preferably at least 5 mass%, more preferably at least 7 mass%, further preferably at least 10 mass%, particularly preferably at least 13 mass%. The upper limit value for the content of the compound (II-3) based on the total mass (100 mass%) of the non-aqueous electrolyte solution is preferably at most 40 mass%, more preferably at most 35 mass%, further preferably at most 30 mass%, particularly preferably at most 27 mass%. When the content of the compound (II-3) is at least the lower limit value, a decrease of battery capacity due to charge and discharge at a high rate can easily be prevented. Further, the degree of dissociation of the lithium salt (I) will be improved, and the conductivity will be better. When the content of the compound (II-3) in the non-aqueous electrolyte solution is at most the upper limit value, the non-aqueous electrolyte solution excellent in flame retardancy can easily be obtainable.

The ratio (Nₗᵢ /N_{Li} of the total number of moles (Nₗᵢ) of the compound (II-3) to the total number of moles (N_{Li}) of lithium atoms in the lithium salt (I), contained in the non-aqueous electrolyte solution of the present invention, is preferably from 0.01 to 6, more preferably from 0.1 to 5, particularly preferably from 1 to 4. When the above ratio (Nₗᵢ /N_{Li}) is at least the lower limit value in the above range, a decrease of battery capacity due to charge and discharge at a high rate can easily be prevented. When the above ratio (Nₗᵢ/N_{Li}) is at most the upper limit value in the above range, the flame retardancy of the electrolyte solution can easily be maintained.

The reason as to why a decrease of battery capacity due to charge and discharge at a high rate can be suppressed by the compound (II-3) when the non-aqueous electrolyte solution of the present invention is employed, is not necessarily clearly understood, but is considered to be as follows.

In charge and discharge of a secondary battery, lithium ions are required to be discoordinated and react with the electrode active material of an electrode, but the discoordination energy is large, since with the compound (II-2), a plurality of intramolecular oxygen atoms are coordinated to the lithium ions. When the compound (II-3) having a high polarity is used as a solvent to assist the solubility of the lithium salt (I) in the compound (II-1) for the electrolyte solution, the polarity of the entire solvent will be improved, whereby the discoordination energy will be decreased, and the compound (II-2) will be readily discoordinated to let lithium ions react efficiently with the electrode active material, thereby to suppress a decrease of battery capacity due to charge and discharge at a high rate.

### (Compound (II-4))

In addition to the above-described compounds (II-1) to (II-3), the solvent (II) for dissolving the electrolyte salt in the present invention, preferably further contains a compound (II-4) which is a compound having a ring made of carbon atoms and oxygen atoms, said ring containing a carbonate bond, and which contains a carbon-carbon unsaturated bond in its molecule.

The ring in the compound (II-4) is preferably a 4- to 10-membered ring, more preferably a 4- to 7-membered ring, further preferably a 5- or 6-membered ring from the viewpoint of easy availability, particularly preferably a 5-membered ring.

The ring in the compound (II-4) is preferably a ring having one carbonate bond.

The carbon-carbon unsaturated bond in the compound (II-4) may be present in the ring or outside of the ring. The number of carbon-carbon unsaturated bonds in one molecule is preferably from 1 to 5, more preferably from 1 to 3, further preferably from 1 to 2 from the viewpoint of easy availability and the durability of the non-aqueous electrolyte solution, particularly preferably 1.

The compound (II-4) is preferably the following compound (8-1) or (8-2).

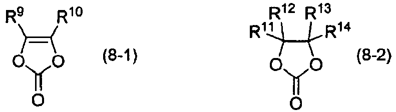

In the above formula, each of R⁹ and R¹⁰ which are independent of each other, is a hydrogen atom, a halogen atom, an alkyl group or a halogenated alkyl group.

Each of R¹¹ to R¹⁴ which are independent of one another, is a hydrogen atom, an alkyl group, a vinyl group or an allyl group, provided that at least one of R¹¹ to R¹⁴ is a vinyl group or an allyl group.

As the compound (II-4), it is possible to use the compound (8-1) only, the compound (8-2) only, or the compound (8-1) and the compound (8-2) in combination.

The compound (II-4) is preferably 4-vinyl-1,3-dioxolan-2-one, dimethylvinylene carbonate or vinylene carbonate, particularly preferably vinylene carbonate.

When charging is carried out with a secondary battery using a non-aqueous electrolyte solution containing the compound (II-4), the compound (II-4) will be decomposed and form a stable coating film on the surface of the negative electrode (such as a carbon electrode). The coating film formed by the compound (V) is capable of reducing a resistance at the electrode interface and thus brings about an effect to facilitate intercalation of lithium ions into the negative electrode. That is, the impedance at the negative electrode interface is reduced by the coating film formed by the compound (II-4) in the non-aqueous electrolyte solution, whereby intercalation of lithium ions into the negative electrode is facilitated. Further, the compound (II-4) has a high polarity like the compound (II-3), and it thus facilitates intercalation of lithium ions into the negative electrode and improves the charge and discharge cycle properties, without inhibiting the effects by the compound (II-3).

With a view to providing nonflammability over a long period of time, suppression of phase separation and formation of a large amount of carbon dioxide gas in the non-aqueous electrolyte solution, suppression of a decrease in the low temperature properties and an effect to improve the solubility of the lithium salt (I) at the same time, the content of the compound (II-4) is preferably from 0.01 to 10 vol%, more preferably from 0.05 to 5.0 vol%, particularly preferably from 0.1 to 3.0 vol%, based on the total volume of the solvent (II) for dissolving the electrolyte salt.

### (Preferred combination of lithium salt (I) and solvent (II) for dissolving the electrolyte salt)

As the non-aqueous electrolyte solution of the present invention, a combination of the following lithium salt (I) and the following solvent (II) for dissolving the electrolyte salt, is particularly preferred, since it presents the desired effects of the present invention.

A preferred combination comprises at least one lithium salt (I) selected from the group consisting of LiPF₆, the above compound (5), FSO₂ N(Li)SO₂ F, CF₃SO₂N(Li)SO₂CF₃, CF₃CF₂SO₂N(Li)SO₂CF₂CF₃, LiClO₄, the above compound (6), the above compound (7) and LiBF₄, and a solvent (II) for dissolving the electrolyte salt containing at least one member selected from the group consisting of the compound (1) and the compound (2), as the compound (II-1), the compound (3) as the compound (II-2), and the and the compound (4) as the compound (II-3).

Further, a preferred combination comprises at least one lithium salt (I) selected from the group consisting of LiPF₆, the above compound (5), FSO₂ N(Li)SO₂ F, CF₃SO₂N(Li)SO₂CF₃, CF₃CF₂SO₂N(Li)SO₂CF₂CF₃, LiClO₄, the above compound (6), the above compound (7) and LiBF₄, and a solvent (II) for dissolving the electrolyte salt, containing at least one member selected from the group consisting of the compound (1) and the compound (2), as the compound (II-1), the compound (3) as the compound (II-2), and the compound (4) as the compound (II-3), wherein the content of the compound (II-4) is from 0.01 to 10 vol% based on the total volume of the solvent (II) for dissolving the electrolyte salt.

A more preferred combination comprises at least one lithium salt (I) selected from the group consisting of LiPF₆, CF₃SO₂N(Li)SO₂CF₃, CF₃CF₂SO₂N(Li)SO₂CF₂CF₃, LiClO₄ and LiBF₄, and a solvent (II) for dissolving the electrolyte salt, containing at least one member selected from the group consisting of CF₃ CH₂ OCF₂ CF₂ H, CHF₂CF₂CH₂OCF₂CF₂H, CF₃CF₂CH₂OCF₂CF₂H, CF₃CH₂OCF₂CHFCF₃ and CHF₂ CF₂ CH₂ OCF₂ CFHCF₃ , as the compound (II-1), at least one member selected from the group consisting of a compound of the formula (2) wherein X is CH₂ CH₂ and a compound of the formula (2) wherein X is CH(CH₃)CH₂, as the compound (II-2), and ethylene carbonate or propylene carbonate as the compound (II-3), wherein the content of vinylene carbonate as the compound (II-4) is from 0.01 to 10 vol%, based on the total volume of the solvent (II) for dissolving the electrolyte salt.

A further preferred combination comprises LiPF₆ as the lithium salt (I), a solvent (II) for dissolving the electrolyte salt, containing CF₃ CH₂ OCF₂ CF₂ H as the compound (II-1), diglyme as the compound (II-2), and ethylene carbonate or propylene carbonate, as the compound (II-3), wherein the content of vinylene carbonate as the compound (II-4) is from 0.01 to 10 vol% based on the total volume of the solvent (II) for dissolving the electrolyte salt.

### (Other solvents for dissolving the electrolyte salt)

The solvent (II) for dissolving the electrolyte salt in the present invention may contain solvents made of compounds other than the above-mentioned compounds (II-1), (II-2), (II-3) and (II-4) (hereinafter referred to as "other solvents for dissolving the electrolyte salt") within such a range that the non-aqueous electrolyte solution will not undergo phase separation and the effects of the present invention will not be inhibited.

Such other solvents for dissolving the electrolyte salt include, for example, a fluorinated alkane; a carboxylic acid ester such as a propionic acid alkyl ester, a malonic acid dialkyl ester or an acetic acid alkyl ester; a cyclic ester such as Y-butylolacton; a cyclic sulfonic acid ester such as propane sultone; a sulfonic acid alkyl ester; and a carbonitrile such as acetonitrile, isobutylonitrile or pivalonitrile. The content of other solvents for dissolving the electrolyte salt other than the fluorinated alkane is preferably more than 0 and at most 20 vol%, more preferably more than 0 and at most 10 vol%, particularly preferably more than 0 and at most 5 vol%, based on the total volume of the solvent (II) for dissolving the electrolyte salt.

In a case where the non-aqueous electrolyte solution of the present invention contains a fluorinated alkane as other solvent for dissolving the electrolyte salt, it is possible to suppress the vapor pressure of the non-aqueous electrolyte solution and to further improve nonflammability of the non-aqueous electrolyte solution. The fluorinated alkane is meant for a compound having at least one hydrogen atom in an alkane substituted by a fluorine atom, wherein hydrogen atoms still remain. In the present invention, C₄₋₁₂ fluorinated alkanes are preferred. In a case where a fluorinated alkane having at least 6 carbon atoms is used among them, an effect to lower the vapor pressure of the non-aqueous electrolyte solution can be expected, and when the number of carbon atoms is at most 12, the solubility of the lithium salt (I) can easily be maintained. Further, the fluorine content in the fluorinated alkane (the fluorine content means the proportion of the mass of fluorine atoms in the molecular weight) is preferably from 50 to 80%. When the fluorine content in the fluorinated alkane is at least 50%, the nonflammability becomes higher. When the fluorine content in the fluorinated alkane is at most 80%, the solubility of the lithium salt (I) can easily be maintained.

The fluorinated alkane is preferably a compound having a straight chain structure, and it may, for example, be n-C₄ F₉ CH₂ CH₃, n-C₆ F₁₃ CH₂ CH₃, n-C₆ F₁₃ H or n-C₈ F₁₇ H. One of these fluorinated alkanes may be used alone, or two or more of them may be used in combination.

In a case where the above fluorinated alkane is incorporated to the non-aqueous electrolyte solution of the present invention, the content of such a fluorinated alkane is preferably from 5 to 60 vol%, more preferably from 5 to 30 vol%, based on the total volume of the solvent (II) for dissolving the electrolyte salt. When the content of the fluorinated alkane is at least 5 vol%, the vapor pressure can easily be lowered, and no flammability can easily be obtainable. When the content of the fluorinated alkane is at most 60 vol%, the solubility of the lithium salt (I) can easily be maintained.

Further, in the non-aqueous electrolyte solution of the present invention, the upper limit value of the content of the following compound (9) is preferably at most 30 mass%, more preferably at most 25 mass%, further preferably at most 20%, particularly preferably at most 15%. The lower limit value of the content of the following compound (9) is 0%.

The compound (9) is a chain-structured carbonate compound and has a low flash point, as different from cyclic carbonate compounds such as the compounds (II-3) and (II-4). Therefore, if the compound (9) is incorporated in an amount of 30% or more to the non-aqueous electrolyte solution of the present invention, the flame retardancy is likely to be deteriorated.

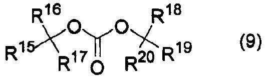

In the formula (9), each of R¹⁵ to R²⁰ which are independent of one another, is a hydrogen atom, a halogen atom, an alkyl group or a halogenated alkyl group.

### (Other components)

To the non-aqueous electrolyte solution of the present invention, other components may be incorporated, as the case requires, in order to improve the functions of the non-aqueous electrolyte solution. Such other components may, for example, be a conventional overcharge-preventing agent, a dehydrating agent, a deoxidizing agent, or a property-improving adjuvant to improve cycle properties or capacity-maintaining properties after storage at a high temperature.

The overcharge-preventing agent may, for example, be an aromatic compound such as biphenyl, an alkylbiphenyl, terphenyl, partially hydrogenated terphenyl, cyclohexylbenzene, t-butylbenzene, t-amylbenzene, diphenyl ether or dibenzofuran; a partially fluorinated product of the above aromatic compound, such as 2-fluorobiphenyl, o-cyclohexylfluorobenzene or p-cyclohexylfluorobenzene; or a fluorinated anisole compound such as 2,4-difluoroanisole, 2,5-difluoroanisole or 2,6-difluoroanisole. Such overcharge-preventing agents may be used alone or in combination as a mixture of two or more of them.

In a case where the non-aqueous electrolyte solution contains an overcharge-preventing agent, the content of the overcharge-preventing agent in the non-aqueous electrolyte solution is preferably from 0.01 to 5 mass%, more preferably from 0.1 to 3 mass%. By incorporating at least 0.1 mass% of the overcharge-preventing agent in the non-aqueous electrolyte solution, it becomes easier to prevent breakage or ignition of a secondary battery by overcharge, and it is possible to use the secondary battery more stably.

The dehydrating agent may, for example, be molecular sieves, salt cake, magnesium sulfate, calcium hydrate, sodium hydrate, potassium hydrate or lithium aluminum hydrate. As the solvent to be used for the non-aqueous electrolyte solution of the present invention, it is preferred to use one subjected to dehydration by the above dehydrating agent, followed by rectification. Otherwise, a solvent subjected to dehydration by the above dehydrating agent without rectification may be used.

The property-improvement adjuvant to improve the cycle properties or the capacity-maintaining properties after storage at a high temperature, may, for example, be a carbonate compound such as phenylethylene carbonate, erythritan carbonate or spiro-bis-dimethylene carbonate; a carboxylic acid anhydride such as succinic anhydride, glutaric anhydride, maleic anhydride, citraconic anhydride, glutaconic anhydride, itaconic anhydride, diglycolic anhydride, cyclohexanedicarboxylic anhydride, cyclopentanetetracarboxylic dianhydride or phenylsuccinic anhydride; a sulfur-containing compound such as ethylene sulfite, 1,3-propanesultone, 1,4-butanesultone, methyl methanesulfonate, busulfan, sulfolane, sulfolene, dimethylsulfone, diphenylsulfone, methylphenylsulfone, dibutyldisulfide, dicyclohexyldisulfide, tetramethylthiuram monosulfide, N,N-dimethylmethane sulfonamide or N,N-diethylmethane sulfonamide; a nitrogen-containing compound such as 1-methyl-2-pyrrolidinone, 1-methyl-2-piperidone, 3-methyl-2-oxazolidinone, 1,3-dimethyl-2-imidazolidinone or N-methylsuccinimide; a hydrocarbon compound such as heptane, octane or cycloheptane; or a fluorinated aromatic compound such as fluorobenzene, difluorobenzene, hexafluorobenzene or benzotrifluoride. These property-improving adjuvants may be used alone or in combination as a mixture of two or more of them.

In a case where the non-aqueous electrolyte solution contains a property-improving adjuvant, the content of the property-improving adjuvant in the non-aqueous electrolyte solution is preferably from 0.01 to 5 mass%, more preferably from 0.1 to 3 mass%.

### [Surfactant]

The non-aqueous electrolyte solution of the present invention preferably contains a surfactant to improve the wettability of the electrode active material with the non-aqueous electrolyte solution. Such a surfactant may be any one of a cationic surfactant, an anionic surfactant, a non-ionic surfactant and an amphoteric surfactant, and it is preferably an anionic surfactant, since it is readily available and presents high surface active effects. Further, the surfactant is preferably a fluorinated surfactant, since it has high oxidation resistance and presents excellent cycle properties and rate properties.

As anionic fluorinated surfactants, the following compounds (8-1) and (8-2) are preferred.

R²³COO^{⊖} M^{1⊕} (8-1)

R²⁴SO₃^{⊖}M^{2⊕} (8-2)

In the above formulae, each of R²³ and R²⁴ which are independent of each other, is a C₄₋₂₀ perfluoroalkyl group, or a C₄₋₂₀ perfluoroalkyl group having at least one etheric oxygen atom between carbon-carbon atoms.

Each of M¹ and M² which are independent of each other, is an alkali metal or NH(R²⁵)₃ (wherein R²⁵ is a hydrogen atom or a C₁₋₈ alkyl group, and the plurality of R²⁵ may be the same groups or different groups).

Each of R² and R²⁴ is preferably a C₄₋₂₀ perfluoroalkyl group, or a C₄₋₂₀ perfluoroalkyl group having at least one etheric oxygen atom between carbon-carbon atoms, since the degree to lower the surface tension of the non-aqueous electrolyte solution is good, more preferably a C₄₋₈ perfluoroalkyl group, or a C₄₋₈ perfluoroalkyl group having at least one etheric oxygen atom between carbon-carbon atoms, in view of the solubility and environmental accumulation properties.

The alkali metal for each of M¹ and M² is preferably Li, Na or K. Each of M¹ and M² is particularly preferably NH⁴⁺.

Specific examples of the compound (8-1) include, for example, fluorinated carboxylic acid salts, such as C₄ F₉ COO⁻ NH₄⁺, C₅ F₁₁ COO⁻ NH₄⁺, C₆ F₁₃ COO⁻ NH₄⁺, C₅ F₁₁ COO⁻ NH(CH₃₎₃⁺, C₆ F₁₃ COO NH(CH₃)₃⁺, C₄ Fg COO Li⁺, C₅ F₁₁ COO Li⁺, C₆ F₁₃ COO⁻ Li⁺, C₃ F₇ OCF(CF₃)COO⁻ NH₄⁺, C₃ F₇ OCF(CF₃)CF₂ OCF(CF₃ )COO⁻NH₄⁺, C₃ F₇ OCF(CF₃)COO⁻ NH(CH₃)₃⁺, C₃ F₇ OCF(CF₃)CF₂ OCF(CF₃)COO⁻NH(CH₃)₃⁺ C₃F₇ OCF(CF₃)COO⁻ Li⁺, C₂ F₅ OC₂ F₄ OCF₂ COO⁻Li⁺, C₂ F₅ OC₂ F₄ OCF₂ COO⁻ NH₄⁺, C₃ F₇ OCF(CF₃)CF₂ OCF(CF₃)COO⁻ Li⁺ , etc.

Among them, from such a viewpoint that the solubility in the non-aqueous electrolyte solution and the effects to lower the surface tension are good, preferred are C₅ F₁₁ COO NH₄⁺, C₅ F₁₁ COO⁻ Li⁺, C₆ F₁₃ COO⁻ Li⁺, C₃ F₇ OCF(CF₃)COO NH₄⁺, C₃ F₇ OCF(CF₃)CF₂ OCF(CF₃)COO⁻ NH₄⁺, C₃ F₇ OCF(CF₃)COO⁻ Li⁺, C₃ F₇ OCF(CF₃)CF₂ OCF(CF₃)COO⁻ Li⁺, C₂ F₅ OC₂ F₄ OCF₂ COO⁻ Li⁺ and C₂F₅OC₂F₄OCF₂ COO⁻ NH₄⁺.

Specific examples of the compound (8-2) include, for example, fluorinated sulfonic acid salts such as C₄ F₉ SO₃⁻NH₄⁺, C₅ F₁₁ SO₃⁻NH₄⁺, C₆ F₁₃ SO₃⁻ NH₄⁺, C₄F₉ SO₃ NH(CH₃)₃⁺, C₅F₁₁SO₃ NH(CH₃)₃⁺, C₆F₁₃SO₃ NH(CH₃)₃⁺, C₄F₉SO₃-Li⁺, C₅ F₁₁ SO₃⁻ Li⁺, C₆ F₁₃ SO₃⁻ Li⁺, C₃ F₇ OCF(CF₃)CF₂ OC(CF₃⁻)FSO₃⁻NH₄⁺, C₃ F₇ OCF(CF₃)CF₂ OCF(CF₃)CF₂ OCF(CF₃)SO₃⁻ NH₄⁺, HCF₂ CF₂ OCF₂ CF₂ SO₃⁻NH₄⁺, CF₃ CFHCF₂ OCF₂ CF₂ SO₃⁻ NH₄⁺, C₃ F₇ OC(CF₃)FSO₃⁻NH₄⁺, C₃ F₇ OCF(CF₃)CF₂ OC(CF₃)FSO₃⁻ NH(CH₃)₃⁺, C₃ F₇ OCF(CF₃)CF₂ OCF(CF₃)CF₂ OCF(CF₃)SO₃⁻ NH(CH₃)₃⁺, HCF₂ CF₂ OCF₂ CF₂ SO⁻ NH(CH₃)₃⁺, CF₃CFHCF₂OCF₂CF₂SO₃-NH(CH₃)₃⁺, C₃ F₇ OCF(CF₃)SO₃⁻ NH(CH₃)₃⁺, C₃ F₇ OCF(CF₃)CF₂ OC(CF₃)FSO₃⁻ Li⁺, C₃F₇OCF(CF₃)CF₂OC(CF₃)FCF₂OCF(CF₃)SO₃-Li⁺, HCF₂ CF₂ OCF₂ CF₂ SO₃⁻ Li⁺, CF₃ CFHCF₂ OCF₂ CF₂ SO₃⁻ Li⁺, C₃ F₇ OCF(CF₃)SO₃⁻ Li⁺, etc.

Among them, from such a viewpoint that the solubility in the non-aqueous electrolyte solution and the effects to lower the surface tension are good, preferred are C₄F₉SO₃⁻NH₄⁺,C₆F¹³SO₃⁻NH₄⁺,C₄F₉SO₃⁻Li⁺,C₆F₁₃SO₃⁺Li⁺,C₈F₁₇SO₃⁻Li⁺, C₃ F₇ OCF(CF₃)CF₂ OCF(CF₃)SO₃⁻ NH₄⁺, C₃ F₇ OCF(CF₃)CF₂ OCF(CF₃)SO₃⁻ Li⁺, C₃ F₇ OCF(CF₃)SO₃⁻ NH₄⁺ and C₃ F₇ OCF(CF₃)SO₃⁻ Li⁺.

In a case where the non-aqueous electrolyte solution of the present invention contains the surfactant, the surfactant may be of one type only, or of two or more types in combination.

In a case where the non-aqueous electrolyte solution contains the surfactant, the mass of the surfactant to the total mass (100 mass%) of the non-aqueous electrolyte solution is preferably at most 5 mass%, more preferably at most 3 mass%, further preferably from 0.05 to 2 mass%.

The non-aqueous electrolyte solution of the present invention is preferred for a secondary battery. Especially in a case where it is used as the electrolyte solution for a lithium ion secondary battery, it lets the lithium salt (I) be dissolved excellently, a practically sufficient conductivity can be obtained, a decrease of battery capacity due to charge and discharge at a high rate can be suppressed, and nonflammability will be excellent. Further, it may be used for secondary batteries other than a lithium ion secondary battery. As such other secondary batteries, an electric double layer capacitor, a lithium ion capacitor, etc. may, for example, be mentioned.

Patent Document 4 discloses that the electrolyte solution may contain a monoglyme as a chain-structured non-fluorinated ether, but the monoglyme has a low flash point and tends to lower the flame retardancy especially when its content is large. Whereas, in the non-aqueous electrolyte solution of the present invention, the compound (II-2) having a higher flash point than the monoglyme is used, whereby excellent flame retardancy can be obtained.

### <Secondary battery>

The non-aqueous electrolyte solution of the present invention is preferably used as an electrolyte solution for a lithium ion secondary battery. Such a secondary battery is one comprising a negative electrode and a positive electrode, and the non-aqueous electrolyte solution of the present invention.

The negative electrode may be an electrode containing a negative electrode active material capable of absorbing and desorbing lithium ions. Such a negative electrode active material is not particularly limited, so long as it is one capable of electrochemically absorbing and desorbing lithium ions. Its specific example may, for example, be a carbon material, an alloy material, a lithium-containing metal composite oxide material or metal lithium. Such negative electrode active materials may be used alone or in combination as a mixture of two or more of them.

Among them, a carbon material is preferred as the negative electrode active material.

As such a carbon material, graphite or a carbon material having the surface of graphite covered with carbon amorphous as compared with the graphite, is particularly preferred.

The graphite preferably has a value d (interlayer distance, hereinafter referred to simply as a value d) of the lattice plane (002 face) being from 0.335 to 0.338 nm, more preferably from 0.335 to 0.337 nm, as obtained by X-ray diffraction by the method stipulated by Carbon Material Committee No. 117 of the Japan Society for Promotion of Scientific Research (hereinafter referred to as the method of the Japan Society for Promotion of Scientific Research). Further, the crystallite size (Lc) obtained by X-ray diffraction by the method of the Japan Society for Promotion of Scientific Research is preferably at least 30 nm, more preferably at least 50 nm, further preferably at least 100 nm. The ash content in the graphite is preferably at most 1 mass%, more preferably at most 0.5 mass%, further preferably at most 0.1 mass%.

Further, the carbon material having the surface of graphite covered with amorphous carbon is preferably such that graphite having a value d of from 0.335 to 0.338 nm is used as a nucleus, the surface of such graphite is covered with amorphous carbon having a value d larger than the graphite, and the ratio of the nucleus graphite (mass: W_{A}) to the amorphous carbon (mass: W_{B}) covering the graphite is preferably from 80/20 to 99/1 by mass ratio (W_{A}/W_{B}). By using such a carbon material, it becomes easy to produce a negative electrode having a high capacity and being scarcely reactive with the non-aqueous electrolyte solution.

The particle diameter of the carbon material is preferably at least 1 µm, more preferably at least 3 µm, further preferably at least 5 µm, particularly preferably at least 7 µm, by a median diameter by a laser diffraction scattering method. Further, the upper limit of the particle diameter of the carbon material is preferably 100 µm, more preferably 50 µm, further preferably 40 µm, particularly preferably 30 µm.

The specific surface area of the carbon material by BET method is preferably at least 0.3 m²/g, more preferably at least 0.5 m²/g, further preferably at least 0.7 m²/g, particularly preferably at least 0.8 m²/g. The upper limit of the specific surface area of the carbon material is preferably 25.0 m²/g, more preferably 20.0 m²/g, further preferably 15.0 m²/g, particular preferably 10.0 m²/g.

The carbon material preferably has a value R (=I_{B}/I_{A}) of from 0.01 to 0.7, which is represented by a ratio of the peak intensity I_{B} of peak P_{B} within a range of from 1,300 to 1,400 cm⁻¹ to the peak intensity I_{A} of peak P_{A} within a range of from 1,570 to 1,620 cm⁻¹, as analyzed by a Raman spectrum using an argon ion laser beam. Further, the half value width of the peak P_{A} is preferably at most 26 cm⁻¹, particularly preferably at most 25 cm⁻¹.

A metal which can be used as a negative electrode active material other than metal lithium may, for example, be Ag, Zn, AI, Ga, In, Si, Ti, Ge, Sn, Pb, P, Sb, Bi, Cu, Ni, Sr or Ba. Further, as a lithium alloy, an alloy of lithium with such a metal may be mentioned. Further, as a metal compound, an oxide of such a metal may, for example, be mentioned.

Among them, at least one metal selected from the group consisting of Si, Sn, Ge, Ti and Al, or a metal compound, metal oxide or lithium alloy containing such a metal, is preferred, and more preferred is at least one metal selected from the group consisting of Si, Sn and Al, or a metal compound, lithium alloy or lithium titanate containing such a metal.

A metal capable of absorbing/desorbing lithium ions, a metal compound containing such a metal or a lithium alloy usually has a large battery capacity per unit mass as compared with a carbon material as represented by graphite and thus is suitable as a negative electrode active material for a secondary battery which is required to have a higher energy density.

The positive electrode may, for example, be an electrode containing a positive electrode active material which is capable of absorbing and desorbing lithium ions.

As such a positive electrode active material, a known positive electrode active material for a lithium ion secondary battery may be used, and, for example, a lithium-containing transition metal oxide, a lithium-containing transition metal composite oxide using at least one transition metal, a transition metal oxide, a transition metal sulfide, a metal oxide or an olivine type metal lithium salt may, for example, be mentioned.

The lithium-containing transition metal oxide may, for example, be lithium cobalt oxide, lithium nickel oxide or lithium manganese oxide.

As a transition metal for the lithium-containing transition metal composite oxide, V, Ti, Cr, Mn, Fe, Co, Ni or Cu is, for example, preferred. The lithium-containing transition metal composite oxide may, for example, be a lithium cobalt composite oxide such as LiCoO₂, a lithium nickel composite oxide such as LiNiO₂, a lithium manganese composite oxide such as LiMnO₂, LiMn₂O₄ or LiMnO₃, or one having a part of the transition metal atom which mainly constitutes such a lithium transition metal composite oxide substituted by another metal such as Al, Ti, V, Cr, Mn, Fe, Co, Li, Ni, Cu, Zn, Mg, Ga, Zr, Si or Yb. One having substituted by another metal may specifically be, for example, LiMn₀.₅Ni₀.₅O₂, Limn₁.₈Al_{0.2}O₄, LiNi_{0.85}Co_{0.10}Al_{0.05}O₂, LiMn_{1.5}Ni_{0.5}O₄, LiNi_{1/3}Co_{1/3}Mn_{1/3}O₂ or LIMn_{1.8}Al_{0.2}O₄.

The transition metal oxide may, for example, be TiO₂, MnO₂, MoO₃, V₂O₅ or V₆O₁₃.

The transition metal sulfide may, for example, be TiS₂, FeS or MoS₂.

The metal oxide may, for example, be SnO₂ or SiO₂.

The olivine type metal lithium salt is a substance represented by the formula Li_{L}XₓY_{y}O_{z}F_{g} (wherein X is Fe(II), Co(II), Mn(II), Ni(II), V(II) or Cu(II), Y is P or Si, and L, x, y, z and g are, respectively, 0≦L≦3, 1≦x≦2, 1≦y≦3, 4≦z≦12 and 0≦g≦1) or a composite thereof. For example, LiFePO₄, Li₃Fe₂(PO₄)₃, LiFeP₂O₇, LiMnPO₄, LiNiPO₄, LiCoPO₄, Li₂FePO₄F, Li₂MnPO₄F, Li₂NiPO₄F, Li₂CoPO₄F, Li₂FeSiO₄, Li₂MnSiO₄, Li₂NiSiO₄ or Li₂CoSiO₄ may be mentioned.

These positive electrode active materials may be used alone or in combination as a mixture of two or more of them.

Further, such a positive electrode active material having on its surface attached substance having a composition different from the substance constituting the positive electrode active material as the main component may also be used. The surface-attached substance may, for example, be an oxide such as aluminum oxide, silicon oxide, titanium oxide, zirconium oxide, magnesium oxide, calcium oxide, boron oxide, antimony oxide or bismuth oxide; a sulfate such as lithium sulfate, sodium sulfate, potassium sulfate, magnesium sulfate, calcium sulfate or aluminum sulfate; or a carbonate such as lithium carbonate, calcium carbonate or magnesium carbonate.

With regard to the attached amount of the surface-attached substance, the lower limit based on the total mass of the positive electrode active material is preferably 0.1 ppm, more preferably 1 ppm, further preferably 10 ppm. The upper limit is preferably 20%, more preferably 10%, further preferably 5%. By the surface-attached substance, it is possible to suppress an oxidation reaction of the non-aqueous electrolyte solution at the surface of the positive electrode active material and thereby to improve the battery life.

The positive electrode active material is preferably a lithium-containing composite oxide having an α-NaCrO₂ structure as matrix, such as LiCoO₂, LiNiO₂ or LiMnO₂, or a lithium-containing composite oxide having a spinel structure as matrix, such as LiMn₂O₄, since its discharge voltage is high and its electrochemical stability is high.

The secondary battery of the present invention has a negative electrode and a positive electrode, and the non-aqueous electrolyte solution of the present invention, wherein either one of the negative electrode and the positive electrode is a polarizable electrode, or both of them are polarizable electrodes. The polarizable electrode is preferably one composed mainly of an electrochemically inactive material having a high specific surface area, and it is particularly preferably one made of activated carbon, carbon black, fine particles of a metal or fine particles of a conductive oxide. Among them, preferred is one having an electrode layer made of a carbon material powder having a high specific surface area such as activated carbon formed on the surface of a metal current collector.

For the preparation of an electrode, a binder to bind the negative electrode active material or the positive electrode active material is used.

As such a binder to bind the negative electrode active material or the positive electrode active material, an optional binder may be used so long as it is a material stable against the electrolyte solution and the solvent to be used at the time of preparing the electrodes.

The binder may, for example, be a fluororesin such as polyvinylidene fluoride or polytetrafluoroethylene, a polyolefin such as polyethylene or polypropylene, a polymer or copolymer having unsaturated bonds such as a styrene/butadiene rubber, isoprene rubber or butadiene rubber, or an acrylic acid type polymer or copolymer such as an acrylic acid copolymer or a methacrylic acid copolymer. One of these binders may be used alone, or two or more of them may be used in combination.

In order to increase the mechanical strength and electrical conductivity, a thickener, an electrically conductive material, a filler or the like may be incorporated in the electrode.

The thickener may, for example, be carboxymethylcellulose, methylcellulose, hydroxymethylcellulose, ethylcellulose, polyvinyl alcohol, oxidized starch, phosphorylated starch, casein or polyvinylpyrrolidone. One of these thickeners may be used alone, or two or more of them may be used in combination.

The electrically conductive material may, for example, be a metal material such as copper or nickel, or a carbon material such as graphite or carbon black. One of these electrically conductive materials may be used alone, or two or more of them may be used in combination.

An electrode can be prepared by adding a binder, a thickener, an electrically conductive material, a solvent, etc. to a negative electrode active material or a positive electrode active material, to form a slurry, which is then applied to a current collector, followed by drying. In such a case, the electrode is preferably pressed and densified by pressing after the drying.

If the density of the positive electrode active material layer is too low, the capacity of the secondary battery is likely to be inadequate.

As the current collector, various types of current collector may be used. However, usually a metal or an alloy is employed. As a current collector for a negative electrode, copper, nickel, stainless steel or the like may be mentioned, and copper is preferred. Whereas, as a current collector for a positive electrode, a metal such as aluminum, titanium or tantalum, or its alloy may be mentioned, and aluminum or its alloy is preferred, and aluminum is particularly preferred.

The shape of the secondary battery may be selected depending upon the particular application, and it may be a coin-form, a cylindrical form, a square form or a laminate form. Further, the shapes of the positive electrode and the negative electrode may also be suitably selected to meet with the shape of the secondary battery.

The charging voltage of the secondary battery of the present invention is preferably at least 3.4 V, more preferably at least 4.0 V, further preferably at least 4.2 V. In a case where the positive electrode active material of the secondary battery is a lithium-containing transition metal oxide, a lithium-containing transition metal composite oxide, a transition metal oxide, a transition metal sulfide or a metal oxide, the charging voltage is preferably at least 4.0 V, more preferably at least 4.2 V. Further, in a case where the positive electrode active material is an olivine type metal lithium salt, the charging voltage is preferably at least 3.2 V, more preferably at least 3.4 V.

Between the positive electrode and the negative electrode of the secondary battery, a porous film is usually interposed as a separator in order to prevent short circuiting. In such a case, the non-aqueous electrolyte solution is used as impregnated to the porous film. The material and the shape of the porous film are not particularly limited so long as it is stable against the non-aqueous electrolyte solution and is excellent in the liquid-maintaining property.

The material of the porous film is preferably a fluororesin such as polyvinylidene fluoride, polytetrafluoroethylene or a copolymer of ethylene and tetrafluoroethylene, or a polyolefin such as polyethylene or polypropylene, more preferably a polyolefin such as polyethylene or polypropylene. Further, the shape of the porous film is a porous sheet or a nonwoven fabric made of the above material. Further, such a porous film impregnated with the electrolyte solution and gelated may be used as a gel electrolyte.

The material for a battery exterior package to be used for the non-aqueous electrolyte solution of the present invention may also be a material which is commonly used for secondary batteries, and nickel-plated iron, stainless steel, aluminum or its alloy, nickel, titanium, a resin material, or a film material may, for example, be mentioned.

The secondary battery of the present invention as described above, employs the non-aqueous electrolyte solution of the present invention, whereby it has long-term nonflammability and practically sufficient conductivity, and a decrease of battery capacity due to charge and discharge at a high rate can be suppressed.

Thus, the secondary battery of the present invention may be used in various industrial fields of, for example, mobile phones, portable game devices, digital cameras, digital video cameras, electric tools, notebook computers, portable information terminals, portable music players, electric vehicles, hybrid cars, electric trains, aircrafts, satellites, submarines, ships, uninterruptible power supply systems, robots and electric power storage systems. Further, the secondary battery of the present invention has particularly preferred characteristics when used as a large size secondary battery in the industrial fields of e.g. electric vehicles, hybrid cars, electric trains, aircrafts, satellites, submarines, ships, uninterruptible power supply systems, robots and electric power storage systems.

### EXAMPLES

Now, the present invention will be described in detail with reference to Working Examples and Comparative Examples. However, it should be understood that the present invention is by no means restricted to the following description. Examples 1 to 6 and 21 are Working Examples of the present invention, and Examples 7 to 10, 22 and 23 are Comparative Examples.

### <Evaluation of solubility and conductivity>

### [Example 1]

LiPF₆ (1.52 g) as a lithium salt (I), was dispersed in "AE3000" tradename (CF₃ CH₂ OCF₂ CF₂ H, manufactured by Asahi Glass Company, Limited, 7.4 mL) as a compound (II-1), and then, diglyme (1.89 mL) as a compound (II-2) and ethylene carbonate (1.76 g) as a compound (II-3) were added and mixed to obtain a non-aqueous electrolyte solution.

### [Examples 2 to 10]

A non-aqueous electrolyte solution was obtained in the same manner as in Example 1 except that the composition of the lithium salt (I) and compounds (II-1) to (II-3) was changed as shown in Table 1.

### [Evaluation methods]

With respect to the non-aqueous electrolyte solutions obtained in Examples 1 to 10, a solubility test, a conductivity measurement and a flammability test of each solvent component were carried out.

### (Solubility test)

The state of dissolution of the non-aqueous electrolyte solution after expiration of 1 hour from the preparation of the non-aqueous electrolyte solution in each Example, was visually evaluated. In the evaluation of the solubility, a state such that the electrolyte solution was uniform was identified by "○ (good)", and a state such that the electrolyte solution underwent phase separation into two phases was identified by "× (no good)".

### (Conductivity measurement)

With respect to each obtained non-aqueous electrolyte solution, the conductivity measurement was carried out at 25°C by a known method disclosed in "Molten Salts and High Temperature Chemistry, 2002, vol. 45, p. 42".

### (Flammability test)

10 mL of a non-aqueous electrolyte solution was charged into a 20 mL glass vial, and then, a gas phase portion of 5 mm above the surface of the solution was continuously exposed to a flame of a lighter, whereby the flame retardancy was evaluated on such a basis that one ignited in less than 15 seconds, was identified by "× (no good)", one ignited in from 15 seconds to less than 30 seconds, was identified by "Δ (admissible)", and one not ignited even after 30 seconds, was identified by "○ (good)".

Evaluation results of the solubility, conductivity and flame retardancy are shown in Table 1.

**TABLE 1**

| | | | | Examples of the present invention | | | | | | Comparative Examples | | | |
|---|---|---|---|---|---|---|---|---|---|---|---|---|---|
| | | | | Ex. 1 | Ex. 2 | Ex. 3 | Ex. 4 | Ex. 5 | Ex. 6 | Ex. 7 | Ex.8 | Ex. 9 | Ex. 10 |
| Lithium salt (I) | | LiPF₆ | g | 1.52 | 1.52 | 1.52 | 1.52 | 1.52 | 1.52 | 1.52 | 1.52 | 1.52 | 1.52 |
| | | | mmol | 10.0 | 10.0 | 10.0 | 10.0 | 10.0 | 10.0 | 10.0 | 10.0 | 10.0 | 10.0 |
| Solvent (II) for dissolving electrolyte salt | Compound (II-1) | AE3000 | g | 9.96 | 9.39 | 10.08 | 10.79 | 7.51 | 4.56 | 10.94 | 1.63 | 14.70 | 14.70 |
| | | | mL | 6.77 | 6.39 | 6.86 | 7.34 | 5.11 | 3.10 | 7.44 | 1.11 | 10.00 | 10.00 |
| | | | Vol% | 67.7 | 63.9 | 68.6 | 73.4 | 51.1 | 31.1 | 74.4 | 11.1 | 81.1 | 85.8 |
| | Compound (II-2) | Diglyme | g | 1.78 | 1.78 | 1.34 | 0.89 | 1.78 | 1.78 | 1.78 | 1.78 | 1.78 | 1.34 |
| | | | mm ol | 13.3 | 13.3 | 10.0 | 0.67 | 13.3 | 13.3 | 13.3 | 13.3 | 13.3 | 10.0 |
| | | | vol% | 18.9 | 18.9 | 14.2 | 9.4 | 18.9 | 18.9 | 18.9 | 18.9 | 18.9 | 14.2 |
| | Compound (II-3) | Ethylene carbonate | g | 1.76 | - | - | - | - | - | 0.88 | - | - | - |
| | | | mmol | 20.0 | - | - | - | - | - | 10.0 | - | - | - |
| | | Propylene carbonate | g | - | 2.04 | 2.04 | 1.10 | 3.57 | 5.95 | - | 8.32 | - | - |
| | | | mmol | - | 20.0 | 20.0 | 20.0 | 34.9 | 58.2 | - | 81.5 | - | - |
| | | Content [vol%] | | 13.4 | 17.2 | 17.2 | 17.2 | 30.0 | 50.0 | 6.7 | 70.0 | - | - |
| Nₒ/N_{Li} | | | | 4 | 4 | 3 | 2 | 4 | 4 | 4 | 4 | 4 | 3 |
| Evaluation | | Solubility | | ○ | ○ | ○ | ○ | ○ | ○ | ○ | ○ | ○ | × |
| | | Conductivity | | 0.87 | 0.80 | 0.68 | 0.46 | 0.71 | 0.92 | 0.66 | 0.99 | 0.48 | - |
| | | Flame retardancy | | ○ | ○ | ○ | ○ | ○ | ○ | ○ | Δ | - | - |

As shown in Table 1, in Examples 1 to 6 wherein the compound (II-3) was contained in an amount of more than 10 vol% and at most 60 vol% based on the total volume of the solvent (II) for dissolving the electrolyte salt, dissolution was uniform, good conductivity was obtained, and the flame retardancy was excellent.

On the other hand, in the non-aqueous electrolyte solution in Example 7, the content of the compound (II-3) was less than 10 vol% based on the total volume of the solvent (II) for dissolving the electrolyte salt, whereby the conductivity was low as compared with the non-aqueous electrolyte solutions in Examples 1 and 2 wherein the content of the compound (II-3) was larger than in Example 7 and the content of diglyme was the same.

In the non-aqueous electrolyte solution in Example 8, the content of the compound (II-3) exceeded 60 vol% based on the total volume of the solvent (II) for dissolving the electrolyte salt, whereby the flame retardancy was inadequate as compared with the non-aqueous electrolyte solutions in Examples 1 and 2 wherein the content of the compound (II-3) was smaller than in Example 8, and the content of diglyme was the same.

The non-aqueous electrolyte solution in Example 9 contained no compound (II-3), whereby the conductivity was low as compared with Examples 1 and 2 wherein the compound (II-3) was contained, and the content of diglyme was the same as in Example 9.

The non-aqueous electrolyte solution in Example 10 contained no compound (II-3) and thus underwent phase separation. Whereas in Example 3 wherein the compound (II-3) was contained, and the content of diglyme was the same as in Example 10, dissolution was uniform, and good conductivity was obtained and the flame retardancy was also excellent.

### <Evaluation of sheet-form non-aqueous electrolyte solution secondary battery with single-pole cell comprising LiCoO₂ positive electrode-lithium metal foil>

### [Example 21]

90 Parts by mass of LiCoO₂ (tradename: "Selion C", manufactured by AGC Seimi Chemical Co., Ltd.), 5 parts by mass of carbon black (tradename: "DENKABLACK", manufactured by Denki Kagaku Kogyo Kabushiki Kaisha) and 5 parts by mass of polyvinylidene fluoride were mixed, and N-methyl-2-pyrrolidone was added to obtain a slurry. The slurry was applied uniformly on each side of a 20-µm-thick aluminum foil, followed by drying and then by pressing so that the density of the positive electrode active material layer would be 3.0 g/cm³, thereby to obtain a LiCoO₂ positive electrode.

The LiCoO₂ positive electrode, a lithium metal foil having the same area as the LiCoO₂ positive electrode, and a separator made of polyethylene, were laminated in a 2016 type coin cell in the order of the lithium metal foil, the separator and the LiCoO₂ positive electrode, to prepare a battery element, and the non-aqueous electrolyte solution prepared in Example 2 was added, followed by sealing to prepare a coin-type non-aqueous electrolyte solution secondary battery. At that time, to the non-aqueous electrolyte solution, vinylene carbonate was incorporated in an amount of 2 vol% based on the total volume of the solvent (II) for dissolving the electrolyte salt.

### [Examples 22 and 23]

A coin-type secondary battery was prepared in the same manner as in Example 21 except that the non-aqueous electrolyte solution as shown in Table 2 was used.

### <Evaluation of high rate charge/discharge properties>

### [Evaluation method]

Evaluation of the high rate charge/discharge properties of the coin-type secondary battery with a single-pole cell comprising LiCoO₂ positive electrode-lithium metal foil, was carried out by the following method.

At 25°C, a cycle of charging to 4.3 V (the voltage represents a voltage based on lithium) at constant current corresponding to 0.2 C, further charging at the charging upper limit voltage until the current value became 0.02 C, and thereafter discharging to 3 V at constant current corresponding to 0.2 C, was repeated for 5 cycles, to stabilize the secondary battery. In the 6th cycle, charging to 4.3 V was carried out at constant current of 0.2 C, further charging at the charging upper limit voltage was carried out until the current value became 0.02 C, and thereafter, charging to 3 V was carried out at constant current of 0.5 C. In the 7th cycle, charging to 4.3 V was carried out at constant current of 0.2 C, further charging at the charging upper limit voltage was carried out until the current value became 0.02 C, and thereafter, discharging to 3 V was carried out at constant current of 1.0 C. In the 8th cycle, charging to 4.3 V was carried out at constant current of 0.2 C, further charging at the charging upper limit voltage was carried out until the current value became 0.02 C, and thereafter, charging to 3 V was carried out at constant current of 2.0 C. The capacity retention ratio of the discharge capacity at each rate, to the discharge capacity at the time of discharging at 0.2 C was taken as the evaluation result.

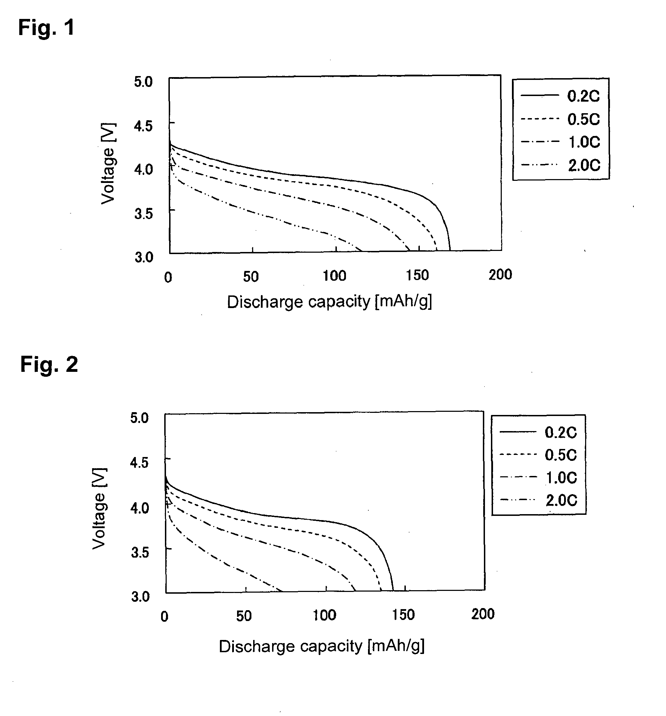

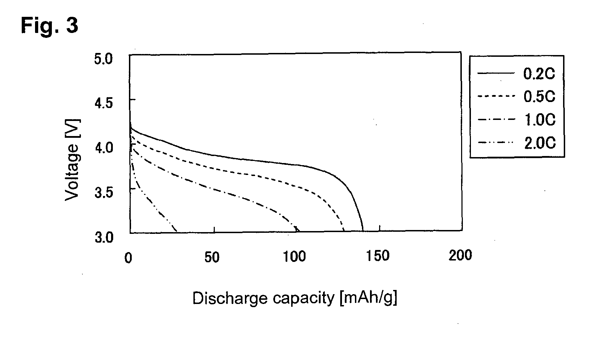

Here, 1 C represents a current value for discharging a standard capacity of a battery in one hour, and 0.2 C represents a current value corresponding to 1/5 thereof. The evaluation results are shown in Table 2. Further, the discharge capacity/voltage curves at the time of discharging at the respective rates are shown in Figs. 1 to 3.

**TABLE 2**

| | | Examples of the present invention | | Comparative Examples | | | |
|---|---|---|---|---|---|---|---|
| | | Ex. 21 | | Ex. 22 | | Ex. 23 | |
| Electrolyte solution | | Ex. 2 | | Ex. 7 | | Ex. 9 | |
| Evaluation | | Discharge capacity | Capacity retention ratio | Discharge capacity | Capacity retention ratio | Discharge capacity | Capacity retention ratio |
| | | [mAh/g] | [%] | [mAh/g] | [%] | [mAh/g] | [%] |
| Discharge rate | 0.2 C | 161 | 100 | 142 | 96 | 143 | - |
| | 0.5 C | 156 | 96 | 134 | 91 | 133 | 93 |
| | 1.0 C | 143 | 88 | 119 | 81 | 109 | 76 |
| | 2.0 C | 112 | 69 | 73 | 49 | 42 | 29 |

As shown in Table 2 and Figs. 1 to 3, the secondary battery in Example 21 had a high capacity retention ratio during discharge at 2.0 C to the discharge capacity during discharge at 0.2 C, whereby a decrease of the battery capacity due to discharge at a high rate was suppressed, since a non-aqueous electrolyte solution containing the compound (II-3) in an amount of more than 10 vol% and at most 60 vol% based on the total volume of the solvent (II) for dissolving the electrolyte salt, was used.

On the other hand, the secondary battery in Example 22 had a low capacity retention ratio during discharge at 2.0 C to the discharge capacity during discharge at 0.2 C, whereby the battery capacity during discharge at a high rate, decreased, since a non-aqueous electrolyte solution containing the compound (II-3) in an amount of less than 10 vol% based on the total volume of the solvent (II) for dissolving the electrolyte salt, was used.

The secondary battery in Example 23 had a low capacity retention ratio during discharge at 2.0 C to the discharge capacity during discharge at 0.2 C, whereby the battery capacity during discharge at a high rate, decreased, since a non-aqueous electrolyte solution containing no compound (II-3), was used.

### INDUSTRIAL APPLICABILITY

The non-aqueous electrolyte solution for secondary batteries of the present invention and the secondary cell using it have both long-term nonflammability and practically sufficient conductivity and are capable of suppressing a decrease of the battery capacity due to charge and discharge at a high rate. Therefore, they are useful for secondary batteries in various industrial fields of e.g. mobile phones, notebook computers, electric automobiles, etc. Further, the non-aqueous electrolyte solution for secondary batteries, of the present invention, is capable of dissolving a lithium salt excellently and is excellent also in non-flammability and thus is useful for other charging devices such as an electric double-layer capacitor, a lithium-ion capacitor, etc.

The entire disclosure of Japanese Patent Application No. 2010-123177 filed on May 28, 2010 including specification, claims, drawings and summary is incorporated herein by reference in its entirety.

## Claims

1. A non-aqueous electrolyte solution for secondary batteries, comprising:
a lithium salt (I), and
a solvent (II) for dissolving the electrolyte salt, containing at least one compound (II-1) selected from the group consisting of a compound represented by the following formula (1) and a compound represented by the following formula (2), a compound (II-2) represented by the following formula (3), and a compound (II-3) which is a compound having a ring made of carbon atoms and oxygen atoms, said ring containing a bond represented by -O-C(=O)-O-, and which contains no carbon-carbon unsaturated bond in its molecule, wherein the content of the compound (II-3) is more than 10 vol% and at most 60 vol%, based on the total volume of the solvent (II) for dissolving the electrolyte salt:
R¹-O-R² (1) 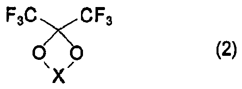
R³-O(̵Q¹-O)̵ₘR⁴ (3)
wherein each of R¹ and R² which are independent of each other, is a C₁₋₁₀ alkyl group, a C₃₋₁₀ cycloalkyl group, a C₁₋₁₀ fluorinated alkyl group, a C₃₋₁₀ fluorinated cycloalkyl group, a C₁₋₁₀ alkyl group having at least one etheric oxygen atom between carbon-carbon atoms, or a C₁₋₁₀ fluorinated alkyl group having at least one etheric oxygen atom between carbon-carbon atoms,
X is a C₁₋₅ alkylene group, a C₁₋₅ fluorinated alkylene group, a C₁₋₅ alkylene group having at least one etheric oxygen atom between carbon-carbon atoms, or a C₁₋₅ fluorinated alkylene group having at least one etheric oxygen atom between carbon-carbon atoms,
m is an integer of from 2 to 10, and Q¹ is a C₁₋₄ linear alkylene group, or a group having at least one hydrogen atom in the linear alkylene group substituted by a C₁₋₅ alkyl group or by a C₁₋₅ alkyl group having at least one etheric oxygen atom between carbon-carbon atoms, provided that the plurality of Q¹ may be the same groups or different groups, and
each of R³ and R⁴ which are independent of each other, is a C₁₋₅ alkyl group, or R³ and R⁴ are linked to each other to form a C₁₋₁₀ alkylene group.

2. The non-aqueous electrolyte solution for secondary batteries according to Claim 1, wherein the content of the compound (II-1) in the solvent for the electrolyte solution is from 20 to 90 mass%, based on the total volume of the solvent for the electrolyte solution.

3. The non-aqueous electrolyte solution for secondary batteries according to Claim 1, wherein the compound (II-3) is a compound represented by the following formula (4): 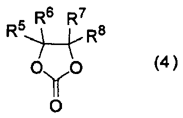 wherein each of R⁵ to R⁸ which are independent of one another, is a hydrogen atom, a halogen atom, an alkyl group or a halogenated alkyl group.

4. The non-aqueous electrolyte solution for secondary batteries according to Claim 1, 2 or 3, wherein the compound (II-3) is at least one member selected from the group consisting of propylene carbonate, ethylene carbonate, butylene carbonate, 4-chloro-1,3-dioxolan-2-one, 4-fluoro-1,3-dioxolan-2-one and 4-trifluoromethyl-1,3-dioxolan-2-one.

5. The non-aqueous electrolyte solution for secondary batteries according to any one of Claims 1 to 4, wherein the ratio of No/ N_{Li} in the non-aqueous electrolyte solution for secondary batteries is from 2 to 6, where No is the total number of moles of etheric oxygen atoms in the compound (II-2) and N_{Li} is the total number of moles of lithium atoms in the lithium salt.

6. The non-aqueous electrolyte solution for secondary batteries according to any one of Claims 1 to 5, wherein the molar amount of the electrolyte to the total mass of the electrolyte solution is from 0.1 to 3.0 mol/L, and the mass of the non-fluorinated ether compound to the total mass of the electrolyte solution is from 1 to 20 mass%.

7. The non-aqueous electrolyte solution for secondary batteries according to any one of Claims 1 to 6, wherein the electrolyte solution contains a saturated chain carbonate compound represented by the following formula (9), and the mass of the saturated chain carbonate compound to the total mass of the electrolyte solution is from 0 to 30 mass%:

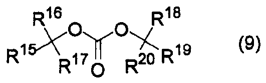

8. The non-aqueous electrolyte solution for secondary batteries according to any one of Claims 1 to 7, wherein the lithium salt (I) is at least one member selected from the group consisting of LiPF₆, a compound represented by the following formula (5), FSO₂N(Li)SO₂F, CF₃SO₂N(Li)SO₂CF₃, CF₃CF₂SO₂N(Li)SO₂CF₂CF₃, LiClO₄, a compound represented by the following formula (6), a compound represented by the following formula (7), and LiBF₄: 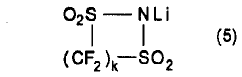 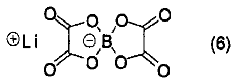 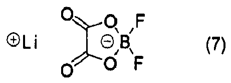 wherein k is an integer of from 1 to 5.

9. The non-aqueous electrolyte solution for secondary batteries according to Claim 8, wherein the lithium salt (I) is a compound represented by the formula (5) wherein k is 2.

10. The non-aqueous electrolyte solution for secondary batteries according to any one of Claims 1 to 9, wherein the compound (II-2) is a compound represented by the following formula (3A): 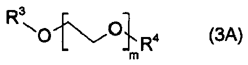 wherein m is an integer of from 2 to 10, and each of R³ and R⁴ which are independent of each other, is a C₁₋₅ alkyl group, or R³ and R⁴ are linked to each other to form a C₁₋₁₀ alkylene group.

11. The non-aqueous electrolyte solution for secondary batteries according to any one of Claims 1 to 10, wherein the compound (II-1) is at least one member selected from the group consisting of CF₃CH₂OCF₂CF₂H, CHF₂CF₂CH₂OCF₂CF₂H, CF₃CF₂CH₂OCF₂CHF₂, CF₃CH₂OCF₂CHFCF₃ and CHF₂CF₂CH₂O CF₂CFHCF₃.

12. The non-aqueous electrolyte solution for secondary batteries according to any one of Claims 1 to 11, wherein the compound (II-1) is a compound represented by the formula (2) wherein X is at least one member selected from the group consisting of CH₂, CH₂CH₂, CH(CH₃) CH₂ and CH₂CH₂CH₂.

13. The non-aqueous electrolyte solution for secondary batteries according to any one of Claims 1 to 12, which further contains a compound (II-4) which is a compound having a ring made of carbon atoms and oxygen atoms, said ring containing a bond represented by -O-C(=O)-O-, and which contains a carbon-carbon unsaturated bond in its molecule.

14. The non-aqueous electrolyte solution for secondary batteries according to Claim 13, wherein the compound (II-4) is at least one of a compound represented by the following formula (8-1) and a compound represented by the following formula (8-2): 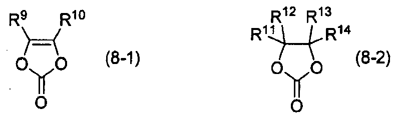 wherein each of R⁹ and R¹⁰ which are independent of each other, is a hydrogen atom, a halogen atom, an alkyl group or a halogenated alkyl group, and each of R¹¹ to R¹⁴ which are independent of one another, is a halogen atom, an alkyl group, a vinyl group or an allyl group, provided that at least one of R¹¹ to R¹⁴ is a vinyl group or an allyl group.

15. An electrolyte solution for lithium ion secondary batteries, using the non-aqueous electrolyte solution for secondary batteries as defined in any one of Claims 1 to 14.

16. A secondary battery comprising a negative electrode made of a carbon material, metal lithium, a lithium-containing metal composite oxide material or a lithium alloy, as a material capable of absorbing and desorbing lithium ions, a positive electrode made of a material capable of absorbing and desorbing lithium ions, and the non-aqueous electrolyte solution for secondary batteries as defined in any one of Claims 1 to 14.
